# EUROPEAN PATENT APPLICATION

(11) **EP 4 726 708 A1**
(43) Date of publication of application: **15.04.2026**
(21) Application number: 25206780.6
(22) Date of filing: 06.10.2025
(51) Int. Cl.: G10H 1/00

(54) **METHOD, DEVICE, MEDIUM, AND PRODUCT FOR GENERATING IN-VEHICLE MUSIC**

(30) Priority: 08.10.2024 CN 202411397022
(71) Applicant: Cariad (China) Co., Ltd., Beijing 100028 (CN)
(72) Inventor: QU, Jingjing, Beijing, 100028 (CN)
(74) Representative: Müller-Boré & Partner Patentanwälte PartG mbB

(57) **Abstract**

Embodiments of the present disclosure provide a method (200) for generating in-vehicle music. The method includes collecting (202) scene data during vehicle driving. The method further includes generating (204) a vehicle scene prompt based on the scene data and generating (206) in-vehicle music based on the vehicle scene prompt. By using the method, music corresponding to the scene can be automatically generated and played with the environment change in the driving process, which is helpful to improve the driving experience of the driver.

## Description

### FIELD

Embodiments of the present disclosure relate generally to the field of vehicles, and particularly to methods, electronic devices, media, and program products for generating in-vehicle music.

### BACKGROUND

With the development of technology, in-vehicle entertainment functions are emerging endlessly, and the in-vehicle entertainment system has become an important part of improving the driving experience. Through the computing power and ecosystem of vehicle resources or mobile phones, hardware resources or software resources, such as vehicle displays and audio systems in vehicle equipment, are called to provide users with visual and auditory entertainment experiences.

Through intelligent music playback, the in-vehicle music system may relieve driving fatigue, enhance the emotional stability of drivers, and provide better entertainment support for long-distance driving. Through the in-vehicle entertainment function, the vehicle may be transformed from a simple vehicle of transportation into a mobile music entertainment space, so that the user can improve the user experience while driving in smart cars.

### SUMMARY

Embodiments of the present disclosure provide methods, electronic devices, media, and program products for generating in-vehicle music.

According to a first aspect of the present disclosure, a method for generating in-vehicle music is provided, the method includes collecting scene data during vehicle driving. The method further includes generating a vehicle scene prompt based on the scene data, and generating in-vehicle music based on the vehicle scene prompt.

According to a second aspect of the present disclosure, an electronic device for generating in-vehicle music is provided, which includes a processor, and a memory coupled to the processor and storing instructions that, when executed by the processor, cause the device to perform steps of the method of generating in-vehicle music according to an embodiment of the present disclosure.

In a third aspect of the present disclosure, a computer-readable storage medium is provided, on which computer-executable instructions are stored, and the computer-executable instructions are executed, causing a computer to perform the steps of a method of generating in-vehicle music according to an embodiment of the present disclosure.

According to a fourth aspect of the present disclosure, a computer program product is provided. The computer program product tangibly stored on a non-transitory computer readable medium and comprising machine-executable instructions which, when executed, cause a machine to perform the steps of a method of generating in-vehicle music according to embodiments of the present disclosure.

It should be noted that this summary is provided to introduce concepts in a simplified form, which will be further described in the following detailed description. The Summary section is not intended to identify key features or essential features of the present disclosure, nor is it intended to limit the scope of the present disclosure.

### BRIEF DESCRIPTION OF THE DRAWINGS

The above and other objects, features, and advantages of the present disclosure will become more apparent by describing in detail exemplary embodiments thereof with reference to the accompanying drawings, in which:
FIG. 1 is a schematic diagram of an example application scenario of a method for in-vehicle music according to an embodiment of the present disclosure;
FIG. 2 illustrates a flowchart of a method of generating in-vehicle music according to an embodiment of the present disclosure;
FIG. 3 illustrates a schematic diagram of a method for generating in-vehicle music according to an embodiment of the present disclosure;
FIG. 4 shows a schematic block diagram of a device that may be used to implement embodiments of the present disclosure.

### DETAILED DESCRIPTION OF EMBODIMENTS

Example embodiments will now be described more fully with reference to the accompanying drawings. However, the example embodiments can be implemented in various forms and should not be construed as limited to the embodiments set forth herein; Rather, these embodiments are provided so that this disclosure will be thorough and complete, and the concept of the example embodiments will be fully conveyed to those skilled in the art. Like reference numerals in the drawings represent like or similar parts, and thus repetitive description thereof will be omitted.

Furthermore, the described feature, structure, or characteristic may be incorporated in one or more embodiments in any suitable manner. In the following description, numerous specific details are provided to provide a thorough understanding of the embodiments of the present application. However, those skilled in the art will appreciate that the technical solutions of the present application may be practiced without one or more of the specific details, or other methods, components, apparatus, steps, etc. may be employed. In other cases, well-known methods, apparatus, implementations, or operations are not shown or described in detail to avoid obscuring aspects of the present application.

In the description of embodiments of the present disclosure, the term "comprising" and variations thereof should be understood as openly inclusive, that is, "including but not limited to". The term "based on" should be understood as "based at least in part on". The term "one embodiment" or "the embodiment" should be understood as "at least one embodiment". Although the terms first, second, third, etc. may be used herein to describe various components, these components should not be limited by these terms. These terms are used to distinguish one component from another. Accordingly, the first component discussed below may be referred to as the second component without departing from the teachings of the concepts of the present application. As used herein, the term "and/or" and similar terms include all combinations of any one, multiple, and all of the associated listed items.

The block diagrams shown in the drawings are merely functional entities and do not necessarily correspond to physically separate entities. That is, these functional entities may be implemented in software form, or in one or more hardware modules or integrated circuits, or in different networks and/or processor apparatus and/or microcontroller apparatus.

The flowcharts shown in the accompanying drawings are merely illustrative purposes and do not necessarily include all contents and operations/steps, nor do they necessarily need to be performed in the order described. For example, some operations/steps may also be decomposed, while some operations/steps may be combined or partially combined, Therefore, the order of actual execution may be changed depending on the actual situation.

With the popularity of intelligent in-vehicle systems, users have higher requirements for driving experience. Traditional music playback methods often fail to satisfy the music demands of users in specific driving scenarios. For example, a user may prefer to hear soft music when driving in the rain. On the highway, the user may prefer energetic tunes. At present, most in-vehicle music systems play music based on fixed and preset playlist loops, or the user chooses to play music. This method cannot respond to changes in the external environment or the mood of the driver in real time, and lacks personalization and real-time playback that adapts to the specific situation.

At least to address the above and other potential problems, embodiments of the present disclosure provide a method for generating in-vehicle music. The method includes collecting scene data during vehicle driving. The method further includes generating a vehicle scene prompt based on the scene data and generating in-vehicle music based on the vehicle scene prompt. By using the method, music corresponding to the scene can be automatically generated and played with the environment change in a driving process, which is helpful to improve the driving experience of the driver.

The basic principles and several example implementations of the present disclosure are described below with reference to the following figures. It should be understood that these exemplary embodiments are given only to enable those skilled in the art to better understand and thus implement the embodiments of the present disclosure, and are not intended to limit the scope of the present disclosure in any way.

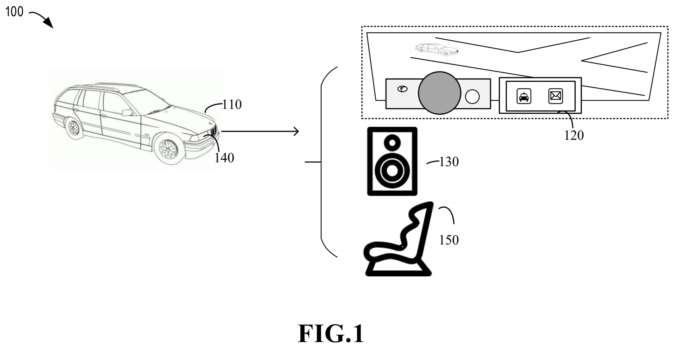

FIG. 1 is a schematic diagram of an example application scenario of a method for in-vehicle music according to an embodiment of the present disclosure. As shown in FIG. 1, the example environment 100 includes a vehicle 110, which is equipped with elements or components such as a display screen 120 of a vehicle controller, a smart speaker 130, vehicle lights 140, and a seat 150. It should be understood that the elements shown in FIG. 1 are merely exemplary and that the vehicle 110 may include more or fewer elements or components, and the present disclosure is not limited thereto.

The display screen 120 of the vehicle 110 is capable of displaying and controlling various functions of the in-vehicle music system in real time. The driver can select a music playback mode, view a currently played track, adjust the volume, set a music preference, etc. by touching the display screen 120. In addition, the display screen 120 can also be connected to the on-board sensor and the AI analysis module to present the driving data of the vehicle and related music recommendation content in real time.

In some embodiments, the vehicle controller may include an AIGC (Artificial Intelligence Generated Content) music generation model for generating and adjusting music. For example, the music generation model may be a music generation model based on deep learning (such as a Recursive Neural Network (RNN), a transformer model, a Generate Antagonistic Network (GAN), a variational autoencoder (VAE)), which may be able to generate music pieces with a time series structure by learning data of a large number of music samples, ensuring that the generated music is coherent and rhythmical.

In some embodiments, the music generation model in the vehicle controller may also be a style migration-based music generation model, which may migrate characteristics (such as rhythm and timbre) of one music style to another music content. For example, the music generation model may select to apply the music style collected by the driver to the currently playing in-vehicle music, making the generated music more personalized and in line with the current mood of the driver.

In some embodiments, the music generation model in the vehicle controller may be based on a lyrics generation model that may generate lyric content matching the music style. In some embodiments, the music generation model in the vehicle controller may further be a personalized recommendation model based on user preferences, and recommends personalized music content by analyzing the music preferences of the user, historical playback records, and behavior data. Additionally or alternatively, the music generation model in the vehicle controller may also be a combination of one or more models of the music generation models described above, and the present disclosure does not limit this.

In the vehicle 110, the intelligent speaker 130 may support high-quality music playback, and the vehicle controller may also dynamically adjust sound effects based on the environmental data of the vehicle through the intelligent speaker 130. For example, the intelligent speaker 130 may automatically optimize the volume and sound effect settings according to the traveling speed of the vehicle, the number of passengers in the vehicle, and the type of music currently playing, ensuring the user experience of each passenger in the vehicle 110.

For example, in some embodiments, when the vehicle 110 is monitored to be traveling on a highway, the vehicle controller may enhance the low-frequency and intermediate-frequency sound effects through the intelligent speaker 130 to make the rhythm of the music stronger and clearer, thereby keeping the driver awake and concentrating on driving.

Additionally or alternatively, in some embodiments, when it is monitored that the driver is in a teleconference or communicating with a passenger in the vehicle, the vehicle controller may control the intelligent speaker 130 to highlight the human voice and high-frequency parts, providing a gentler listening experience. In some embodiments, the vehicle controller may provide an adaptive function through the intelligent speaker 130, and adjust the volume distribution based on the number and position of passengers in the vehicle, ensuring a balanced sound experience for all passengers.

According to some embodiments of the present disclosure, the vehicle 110 may further include a variety of sensors and/or monitors (not shown) for collecting scene data during travel of the vehicle. The integration of these sensors and monitors may enable the vehicle 110 to obtain multi-dimensional data related to driving in real time, thereby providing basic information for in-vehicle music analysis, generation, and adjustment. For example, in some embodiments, the vehicle 110 may have one or more camera sensors (interior cameras and/or exterior cameras) installed inside the cockpit and outside the vehicle body. The internal camera may be configured to capture the movement and expression data of the driver.

For example, the interior camera of the vehicle 110 may monitor the facial expression, the degree of eye opening, and the head movement of the driver through the interior camera, analyze the emotional state of the driver (such as concentration, fatigue, tension of the driver), and enable the music content to match the mood of the driver. The external camera may be configured to determine environmental images outside the vehicle, such as a road ahead, surrounding vehicles, pedestrians, and the like, providing visual information about the driving environment of the vehicle 110.

In some embodiments, the vehicle 110 may have sound sensors capable of capturing sound data inside and outside the vehicle. For example, in-vehicle sound sensors may be used to monitor driver and passenger voice commands, intonation changes, and background noise in the vehicle. By analyzing these audio data, the vehicle controller may analyze the conversation content and emotional expression in the vehicle, to dynamically adjust the type of music played.

For example, in some embodiments, when detecting an increase in the volume of the conversation in the vehicle and a tense intonation, the vehicle controller may select to play or generate soothing background music to relieve the tension. In some embodiments, the exterior sound sensor may be configured to determine external environmental noise, such as traffic sound, alarm sound, etc., thereby helping the system to adjust the music volume based on the external noise level, ensuring that the passengers in the vehicle may clearly hear the music.

In some embodiments, a speed sensor for recording the traveling speed of the vehicle in real time may be included in the vehicle 110. For example, when the speed sensor detects that the vehicle is in a high-speed driving state, the vehicle controller may select to play or generate music with a stronger sense of rhythm, and when the speed sensor detects that the vehicle is in a low-speed driving state or is stuck in a traffic jam, the vehicle controller may play gentler music for soothing the mood of driver. In some embodiments, the vehicle controller may analyze the driving style of the driver based on the data of the speed sensor, and generate personalized music content that conforms to the driving style.

In some embodiments, the vehicle 110 may have a GPS positioning sensor for providing geographic location information. The vehicle controller may generate music adapted to the current geographical location based on the GPS positioning sensor. For example, when the vehicle enters a country road region, the vehicle controller may play or generate matched country music. According to some aspects of the present disclosure, when the vehicle 110 is traveling on an urban road, the vehicle controller may play or generate urban-themed music. In addition, the vehicle controller may use GPS data to predict future driving scenes, thereby generating music suitable for the upcoming driving scenes in advance.

Additionally or alternatively, in some embodiments, vehicle 110 may also have weather sensor(s) including temperature sensors, humidity sensors, rain sensors, and lighting sensors, etc. Through these sensors, the vehicle controller may monitor the current weather conditions in real time, such as sunny, cloudy, rainy, or snowy, etc., and determine the type of music and sound effect settings based on these weather data. For example, in some embodiments, on a rainy day, the vehicle controller may play or generate soothing piano or jazz. In sunny weather, the vehicle controller may play or generate brighter music types to enhance the pleasure of driver.

In some embodiments, the vehicle lights 140 may be synchronized with in-vehicle music. For example, the vehicle controller may control the vehicle lights 140 to dynamically blink or change colors based on the rhythm of the currently played music to enhance the visual effect of the music. For example, when fast-paced electronic music is played, the vehicle lights 140 may blink synchronously. When soothing background music is played, the vehicle lamp 140 may be changed to softer light.

Additionally or alternatively, in some embodiments, the vehicle controller may control the seat 150 to generate synchronized vibration feedback based on the rhythm and frequency of the currently played music. For example, when the intelligent speaker 130 plays music with a strong sense of rhythm, the seat 150 may generate synchronous vibration to enhance the passenger's physical experience of the music.

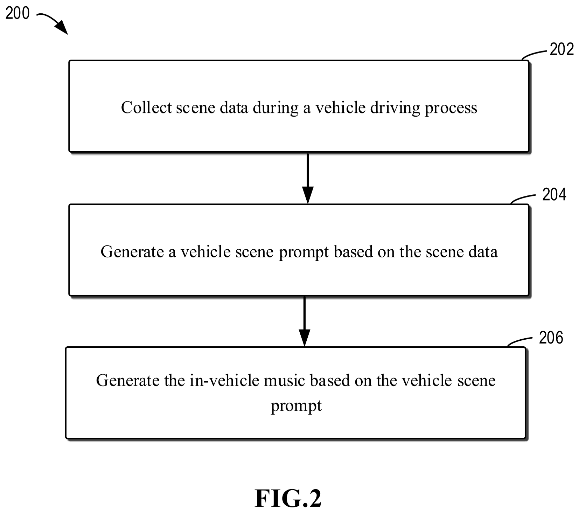

The above describes a schematic diagram of a method for generating in-vehicle music to create an immersive experience environment for a user according to an embodiment of the present disclosure; It should be understood that the above examples are not intended to be limiting, but are merely illustrative for the purpose of facilitating understanding, and embodiments of the present disclosure are not limited to the above examples. The following describes a flowchart of a method 200 for generating in-vehicle music according to an embodiment of the present disclosure, in conjunction with FIG. 2.

At block 202, scene data is collected during a vehicle driving process. According to an embodiment of the present disclosure, the vehicle controller of the vehicle may obtain scene data during traveling of the vehicle through its own sensor or monitor. For example, the camera sensor of the vehicle may collect image data , motion data and expressions of the driver, and other data captured by the camera of the vehicle.

For example, a sound sensor of a vehicle may collect associated audio data such as human voices, ambient sounds, etc. In some embodiments, a speed sensor of the vehicle may collect vehicle speed data, and a GPS positioning sensor may collect location data of the vehicle. According to an embodiment of the present disclosure, the weather sensor of the vehicle may also collect weather data from an external environment.

At block 204, a vehicle scene prompt is generated based on the scene data. According to an embodiment of the present disclosure, the music generation model in the vehicle controller of the vehicle may capture or collect changes in vehicle speed, external weather temperature, climate, driving destination, driving route, holiday, driving geographical location, etc. during driving in real time to construct a music scene and automatically generate scene description texts or prompt.

As an example, the generated prompt may be " Driving in a wheat field in summer, and it is raining lightly outside. The destination is Weihai town, generate a piece of music suitable for the scene and the corresponding lyrics, the song genre 'R&B'." In some embodiments, the generated prompt may be "Driving on a city street at night, there is a slight breeze outside the car, the destination is the city center, generate a piece of music and lyrics suitable for night city driving, the song genre is electronic music."

In some embodiments, the generated prompt may be "Driving fast on the highway, outside the window is a cold winter day, the roadside is covered with snow, the destination is a hot spring in the mountains, generate a piece of music and lyrics suitable for driving in the cold winter, the song genre is 'Classical Music ', and the composition genre is' Beethoven'". In some embodiments, the generated prompt may be "Driving on a forest road in autumn, leaves are blowing in the wind, the destination is a wooden cabin in the forest, generate a piece of country music suitable for autumn, the song genre is 'folk '", etc. These prompts can help the music generation model better understand the current driving scenario, thereby generating music style suggestion prompt and/or lyric creation style prompt that match the scenario, enhancing the emotional experience of driver and immersion during driving.

In some embodiments, the music style suggestion prompt and the lyrics creation style prompt are further generated and updated based on music preferences, historical data, and feedback data of a user. For example, the music generation model may establish a user music preference profile based on a music type manually selected by the user, frequently played tracks, favorite artists and lyricists, and the like. The user music preference profile may include the most frequently selected and played music styles by the user, favorite lyric writing styles, and their preference variations in different scenarios.

For example, in some embodiments, the music preference profile of user may include that the user generally prefers rock music during long-distance drives, but prefers pop music during short city drives. Based on the music preference profile of user, the music generation model may dynamically adjust the music style suggestion prompt and the lyric creation style prompt associated with the scene changes during subsequent driving.

In some embodiments, the music generation model may also update and generate prompts based on real-time feedback data of the user. For example, the user may provide feedback through the vehicle controller, such as commending, criticizing, skipping tracks, or expressing preferences through voice instructions. For example, during a long drive, a user may like "relaxing music" and give a positive evaluation of the played light music.

The music generation model may instantly record this feedback and prioritize the user's "light music" needs in subsequent music recommendations or generation. Based on this feedback, the music generation model may generate prompt such as "Play more light music, composition style 'Debussy', lyric style 'Soothing'".

At block 206, the in-vehicle music is generated based on the vehicle scene prompt. For example, in some embodiments, the music generation model may parse the vehicle scene prompt and decompose it into a plurality of key factors, such as music type, emotional tone, ambient atmosphere, lyrics theme, and the like. These factors may be used to guide the subsequent music generation process. In some embodiments, the music generation model may select a corresponding music generation algorithm or a preset style module.

Additionally or alternatively, in some embodiments, the music generation model may suggest applying a particular composition pattern or template according to the composition style in the prompt, for example, using a similar chord progression, melodic structure, or instrumental arrangement that mimics the style of the target composer.

In some embodiments, the music generation model may include a lyrics generation module that may be based on a large-scale language model to generate lyrics to match the music. After the lyrics are generated, the music generation model may combine them with the generated music melody to create a complete song. In some embodiments, the music generation model may also aggregate the historical music preferences of user, such as the most played music category, the most favored music genres, or the lyrics writing style of a musician, and the like, to automatically generate the music or song library of the driver's own.

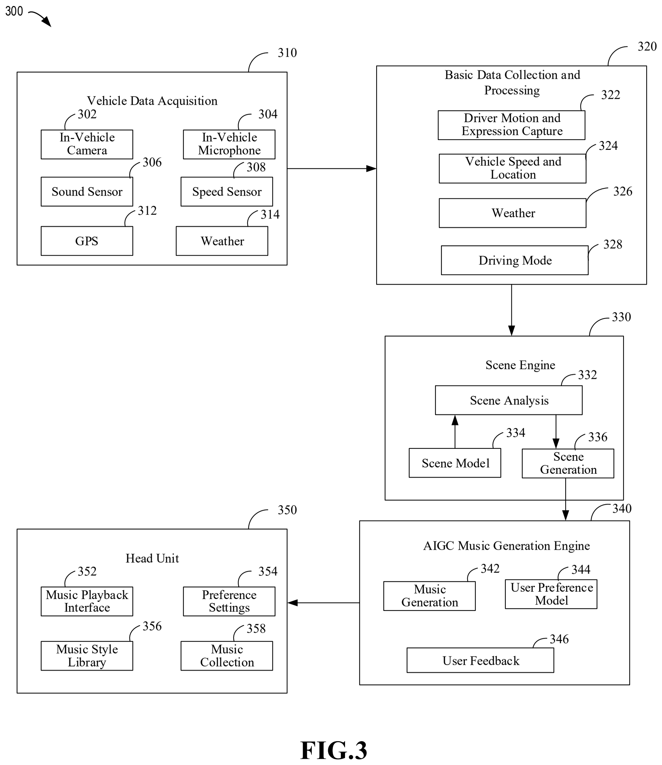

FIG. 3 illustrates a schematic diagram of a method 300 for generating in-vehicle music according to an embodiment of the present disclosure. As shown in FIG. 3, the vehicle 110 may include a vehicle data acquisition module 310. The vehicle data acquisition module 310 may obtain or collect scene data during vehicle driving. For example, the in-vehicle camera 302 in the vehicle data acquisition module 310 may capture image data of the interior of the vehicle, particularly movements and expressions of the driver. These image data may be used to analyze the state of the driver, such as whether or not he is fatigued, distracted, or has a mood change.

In some embodiments, the in-vehicle microphone 304 in the vehicle data acquisition module 310 may collect sound data in the vehicle, including the voice of the driver, interior noise, and the like. The collected sound data may be used for emotion recognition, voice command processing, and monitoring of ambient noise.

According to an embodiment of the present disclosure, the sound sensor 306 in the vehicle data acquisition module 310 may collect the sound environment inside the vehicle, including music volume, intrusion of external noise, and the like, and data helps to understand the sound environment inside the vehicle and perform corresponding music adjustment.

In some embodiments, the speed sensor 308 in the vehicle data acquisition module 310 may record the driving speed of the vehicle. For example, when driving at a high speed, the music generation model implemented according to the embodiment of the present disclosure may generate music with a faster rhythm. According to an embodiment of the present disclosure, the GPS sensor 312 may provide real-time location and geographic location information of the vehicle. The data may be used to generate music content related to the current travel route and destination.

In some embodiments, the weather sensor 314 in the vehicle data acquisition module 310 may be used to collect weather data of the external environment, including temperature, humidity, rainfall, and the like. This data may be used to select and generate music adapted to weather conditions. According to an embodiment of the present disclosure, data collected by the vehicle data acquisition module 310 through various sensors is transmitted to the basic data collection and processing module 320 for further analysis and processing.

According to an embodiment of the present disclosure, the driver motion and expression capture module 322 in the basic data collection and processing module 320 may process image data from the in-vehicle camera 302, analyze the motion and expression of the driver, determine the current emotional state or fatigue degree of the driver, and adjust the music content.

In some embodiments, the vehicle speed and location module 324 in the basic data collection and processing module 320 may process and integrate data from the speed sensor 308 and the GPS sensor 312 to determine the current speed and geographic location of the vehicle, and for scene generation and music selection. In some embodiments, the weather 326 in the basic data collection and processing module 320 may process data from the weather sensor 314, analyze the current weather conditions, and influence the decisions of the music generation module, such as more soothing music may be selected on a rainy day.

In some embodiments, the driving mode module 328 may determine a current driving mode, such as high-speed driving, urban commuting, rural road driving, etc., according to the speed of the vehicle, location, the weather, and the status of the driver. The driving mode module 328, and the results of the analysis, may be delivered as input to the scene engine 330 for generating a corresponding music scene prompt.

In some embodiments, the scene analysis module 332 in the scene engine 330 may analyze the current driving environment and conditions based on the data provided by the basic data collection and processing module 320. The scene analysis module 332 may determine a music style, a composition style, and a lyric style that are most suitable for the current driving situation. In some embodiments, the scene model 334 in the scene engine 330 may determine a model generated after scene analysis, including a detailed description of the driving scene and corresponding music prompt. These scene models may be used to guide the subsequent music generation process.

According to an embodiment of the present disclosure, the scene generation module 336 may construct a detailed vehicle scene prompt based on the result of the scene analysis. These prompts may include the suggested music genres, emotional tone, composition style, and lyrics theme, etc. The generated prompts are delivered to the AIGC music generation engine 340 or the music generation model for music creation.

According to an embodiment of the present disclosure, the AIGC music generation engine 340 or the music generation model may include a music generation module 342 that may generate music conforming to the prompt requirement using artificial intelligence technology (such as deep learning, generative adversarial network, etc.) based on the vehicle scene prompt provided by the scene engine 330. The generated music may include melody, arrangement, harmony, and corresponding lyric content.

In some embodiments, the user preference model module 344 in the AIGC music generation engine 340 may integrate the historical music preferences , feedback data, and current emotional state of the user, ensuring that the generated music conforms to the personal taste of the user and current need. The user preference user feedback module 346 and the module 344 can also be continuously learned and updated to provide more personalized music services.

In some embodiments, the user feedback module 346 in the AIGC music generation engine 340 may collect user feedback after music is generated and played. These feedbacks may be manual inputs through the vehicle display, voice command, or implicit feedback derived from driving behavior analysis, such as frequently skipping a certain type of music. The feedback data may be passed back to the user preference model module 344 for optimizing subsequent music generation.

In some embodiments, playback of music and user feedback may be interacted with the user through the head unit 350. For example, the user may view currently played music information, control music playback, select a music genre, and provide instant feedback through the music playback interface 352 in the head unit 350. The playback interface 352 may be one of the primary ways in which a user interacts with the system.

In some embodiments, the preference settings 354 in the head unit 350 may allow the user to set and adjust their music preferences, including selecting a preferred music genre, composer, lyric style, and the like. The user may directly influence the music of system generation decisions here.

According to an embodiment of the present disclosure, the music style library 356 may store samples and models of various music genres for use by the AIGC music generation engine 340. The music style library 356 may include characteristic data for multiple music genres, ensuring that the generated music is of high quality and diversity. In some embodiments, the music collection module 358 in the head unit 350 may store the favorite music pieces of the user or generated music. These collections can be accessed via the playback interface, and users may also play this music again later during the drive.

Additionally or alternatively, in some embodiments, biosensors installed in the vehicle monitor the heart rate , respiratory rate, and stress level of driver in real time. The sensor may include a wearable device, such as a smart watch, or a sensor directly integrated in a vehicle seat or steering wheel. These devices are able to continuously collect and analyze the physiological data of the driver. For example, when a phenomenon such as a significant increase in the heart rate of the driver and an acceleration in the respiratory rate is detected, it may be determined that the driver may be in a state of tension or fatigue. Based on the analysis results, music capable of helping the driver relax may be generated or selected. This type of music usually has soothing melodies and low-frequency sound effects, thereby alleviating the stress and anxiety of the driver.

Additionally or alternatively, in some embodiments, when a plurality of users enter a vehicle, the system identifies each user through an in-vehicle identification technique, such as a user device connection, and retrieves their music preferences and historical data from a database. These preference data may include information such as the type of music that each user listens to most frequently, favorite artists, composers, and lyric styles.

The music preferences of all users may then be fused. For example, if one user likes pop music and another user likes rock, pop music or pop rock with stronger rhythms can be generated to satisfy both users and avoid playing genres that some users dislike. In some embodiments, user feedback (such as voice commands, manual volume adjustment, or song switching behavior) may also be continuously collected, and music content and style may be dynamically adjusted according to the feedback, so that the generated music better meets the immediate needs of most passengers in the vehicle.

Additionally or alternatively, in some embodiments, navigation data of the vehicle, such as current route, destination, estimated time of arrival, and the like, may be obtained. Based on navigation data and traffic conditions, the system predicts driving scenarios that may be encountered in the next few minutes. For example, if a traffic congestion is detected on a road section ahead, and the vehicle is expected to enter the road section within 10 minutes, music suitable for the traffic congestion scenario may be generated. For example, when entering a traffic congestion section, soothing, gentle-paced background music can be generated to help the driver stay calm. Before entering the open highway, rhythmic music can be generated, which enhances the driving pleasure.

In this way, the method implemented by the present disclosure may respond to changes in the driving scenarios in real time, generate background music for the driver that conforms to the current environment and mood, improve the driving experience, promote the generation of original background music, make everyone a composer on the driving road, and comprehensively consider the mood of driver, external environment, and historical preferences, to be closer to the needs of users.

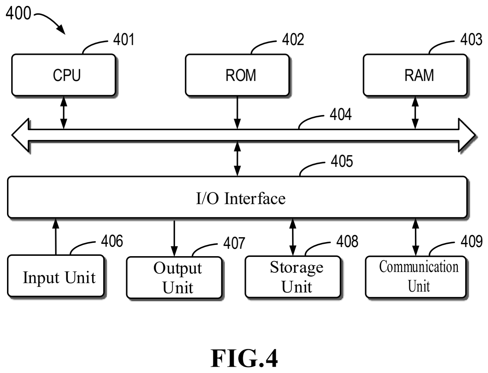

FIG. 4 shows a schematic block diagram of an example device 400 that may be used to implement embodiments of the present disclosure. The vehicle device in FIG. 1 may be implemented with the device 400. As shown, the device 400 may include a central processing unit (CPU) 401 that may perform various appropriate actions and processes in accordance with computer program instructions stored in a read-only memory (ROM) 402 or loaded from a storage unit 408 into a random access memory (RAM) 403. In the RAM 403, various programs and data necessary for the operation of the device 400 may also be stored. The CPU 401, the ROM 402, and the RAM 403 are connected to each other by a bus 404. An input/output (I/O) interface 405 is also connected to the bus 404.

Multiple components in the device 400 are connected to the I/O interface 405, including: an input unit 406, such as a keyboard, a mouse, and the like; an output unit 407 such as various types of displays, speakers, and the like; a memory 407, such as a magnetic disk, an optical disk, or the like; and a communication unit 409, such as a network card, a modem, a wireless communication transceiver, or the like. The communication unit 409 allows the device 400 to exchange information/data with other devices over a computer network such as the Internet and/or various telecommunication networks.

Various processes and processes described above, such as method 200, may be performed by processing unit 401. For example, in some embodiments, the method 200 may be implemented as a computer software program tangibly embodied in a machine-readable medium, such as storage unit 408. In some embodiments, part or all of the computer program may be loaded and/or installed onto the device 400 via the ROM 402 and/or the communication unit 409. When the computer program is loaded into the RAM 403 and executed by the CPU 401, one or more of the actions of the method 200 and process 300 described above may be performed.

The present disclosure may be a method, an apparatus, a system, and/or a computer program product. The computer program product may include a computer-readable storage medium on which computer-readable program instructions are uploaded for performing various aspects of the present disclosure.

A computer-readable storage medium may be a tangible device that may hold and store instructions used by an instruction execution device. The computer-readable storage medium may be, for example, but is not limited to, an electrical storage device, a magnetic storage device, an optical storage device, an electromagnetic storage device, a semiconductor storage device, or any suitable combination of the above. More specific examples (a non-exhaustive list) of computer-readable storage media include portable computer disks, hard disks, random access memory (RAM), read-only memory (ROM), erasable programmable read-only memory (EPROM or flash memory), static random access memory (SRAM), portable compact disk read-only memory (CD-ROM), digital versatile disks (DVD), memory sticks, floppy disks, mechanical encoding devices, such as punch cards or in-groove raised structures having instructions stored thereon, and any suitable combination thereof. Computer-readable storage media as used herein are not to be construed as transient signals per se, such as radio waves or other freely propagating electromagnetic waves, electromagnetic waves propagating through waveguides or other transmission media (e.g., light pulses through fiber optic cables), or electrical signals transmitted through electrical wires.

The computer-readable program instructions described herein may be downloaded from a computer-readable storage medium to various computing/processing devices, or to an external computer or external storage device over a network, such as the Internet, a local area network, a wide area network, and/or a wireless network. The network may include copper transmission cables, fiber optic transmissions, wireless transmissions, routers, firewalls, switches, gateway computers, and/or edge servers. A network adapter card or network interface in each computing/processing device receives computer-readable program instructions from a network and forwards the computer-readable program instructions to be stored in a computer-readable storage medium in the respective computing/processing device.

The computer program instructions for performing the operations of the present disclosure may be assembly instructions, instruction set architecture (ISA) instructions, machine instructions, machine-related instructions, microcode, firmware instructions, state setting data, or source code or object code written in any combination of one or more programming languages, including object-oriented programming languages, such as Smalltalk, C + +, and the like, as well as conventional procedural programming languages, such as the "C" language or similar programming languages. The computer-readable program instructions may be executed entirely on the computer of user, partially on the computer of user, as a standalone software package, partially on the computer of user and partially on a remote computer, or entirely on a remote computer or server. In cases involving a remote computer, the remote computer may be connected to the user computer through any type of network, including a local area network (LAN) or a wide area network (WAN), or may be connected to an external computer (e.g. through the Internet using an Internet Service Provider). In some embodiments, the state information of computer-readable program instructions is used to personalizing a custom electronic circuit, such as a programmable logic circuit, a field programmable gate array (FPGA), or a programmable logic array (PLA), so that the electronic circuit can execute computer-readable program instructions, thereby implementing various aspects of the present disclosure.

Various aspects of the present disclosure are described herein with reference to flowcharts and/or block diagrams of methods, apparatus (systems), and computer program products in accordance with embodiments of the present disclosure. It should be understood that each block of the flowchart and/or block diagrams, and combinations of blocks in the flowchart and/or block diagrams, may be implemented by computer-readable program instructions.

These computer-readable program instructions may be provided to a processing unit of a general-purpose computer, special-purpose computer, or other programmable data processing apparatus, thereby producing a machine such that, when executed by the processing unit of the computer or other programmable data processing apparatus, the instructions produce apparatus for implementing the functions/acts specified in one or more blocks in the flowchart and/or block diagram. These computer-readable program instructions may also be stored in a computer-readable storage medium that cause the computer, programmable data processing apparatus, and/or other device to operate in a particular manner, Thus, such the computer-readable medium storing the instructions comprises an article of manufacture comprising instructions that implement various aspects of the functions/acts specified in one or more blocks in the flowchart and/or block diagram.

Computer-readable program instructions may also be loaded onto a computer, other programmable data processing apparatus, or other device so that a series of operational steps are performed on the computer, other programmable data processing apparatus, or other device to produce a computer-implemented process so that the instructions executed on the computer, other programmable data processing apparatus, or other device implement the functions/actions specified in one or more blocks in the flowchart and/or block diagram.

The flow charts and block diagrams in the drawings illustrate the architecture, functionality, and operation of possible implementations of systems, methods, and computer program products in accordance with multiple embodiments of the present disclosure. In this regard, each block in the flow chart or block diagram may represent a module, program segment, or portion of instructions that contains one or more executable instructions for implementing a specified logical function(s). In some alternative implementations, the functions noted in the blocks may also occur in a different order than that noted in the figures. For example, two consecutive blocks may actually be executed substantially in parallel, and they may sometimes be executed in reverse order, depending upon the functions involved. It is also noted that each block in the block diagrams and/or flowchart diagrams, and combinations of blocks in the block diagrams and/or flow charts illustrations, may be implemented by special purpose hardware-based systems which perform the specified functions or actions, or can be implemented by the combinations of special purpose hardware and computer instructions.

Although various embodiments of the present disclosure have been described above, the above description is exemplary, not exhaustive, and is not limited to the disclosed embodiments. Many modifications and alterations will be apparent to those of ordinary skill in the art without departing from the scope of the various embodiments illustrated. The terminology used herein is selected to best explain the principles, practical applications, or technical improvements to technologies in the market of the various embodiments, or to enable others of ordinary skill in the art to understand the various embodiments disclosed herein.

## Claims

1. A method (200) for generating in-vehicle music, comprising:
collecting (202) scene data during a vehicle driving process;
generating (204) a vehicle scene prompt based on the scene data; and
generating (206) the in-vehicle music based on the vehicle scene prompt.

2. The method (200) of claim 1, wherein collecting the scene data during the vehicle driving process comprises one or more of the following:
collecting motion data and expression data of a driver and image data captured by a camera of the vehicle;
collecting audio data acquired by a sound sensor of the vehicle;
collecting vehicle speed data recorded by a speed sensor of the vehicle;
collecting location data provided by a GPS positioning system of the vehicle; or
collecting weather data from the external environment.

3. The method (200) of claim 1 or 2, wherein generating the vehicle scene prompt based on the scene data comprises:
generating a music style suggestion prompt and/or a lyrics creation style prompt matching the scene data.

4. The method (200) of claim 3, wherein the music style suggestion prompt and the lyrics creation style prompt are further generated and updated based on music preferences, historical data, and feedback data of a user.

5. The method (200) of any one of the preceding claims, wherein generating the in-vehicle music based on the vehicle scene prompt comprises:
generating, by an intelligent music generation engine, the in-vehicle music based on the vehicle scene prompt.

6. The method (200) of any one of the preceding claims, further comprising creating a personalized user music library for a user based on the generated in-vehicle music.

7. The method (200) of claim 1, wherein generating the in-vehicle music comprises:
detecting a physiological health state of a user, wherein the physiological health state comprises one or more of a heart rate, a respiratory rate, or a stress level; and
generating the in-vehicle music based on the physiological health state; and
wherein the method further comprises generating the in-vehicle music that relaxes the user in response to an increase in one or more of the heart rate, the respiratory rate, or the stress level.

8. The method (200) of any one of the preceding claims, wherein generating the in-vehicle music comprises:
generating, in response to a plurality of users being in the vehicle, in-vehicle music conforming to the music preferences of the plurality of users based on the music preferences, historical data, and configurations of the plurality of users.

9. The method (200) of any one of the preceding claims, wherein generating the in-vehicle music comprises:
predicting a vehicle scene prompt based on traffic conditions, driving habits and navigation data of the vehicle; and
generating the in-vehicle music based on the predicted vehicle scene prompt.

10. An electronic device for generating in-vehicle music, comprising:
a processor; and
a memory coupled to the processor and storing instructions that, when executed by the processor, cause the device to perform the method according to any of claims 1 to 9.

11. A computer-readable storage medium having computer-executable instructions stored thereon, wherein the computer-executable instructions, when executed, cause a computer to perform the method according to any of claims 1 to 9.

12. A computer program product tangibly stored on a non-transitory computer-readable medium and comprising machine-executable instructions which, when executed, cause a machine to perform the method according to any of claims 1 to 9.
